# EUROPÄISCHE PATENTSCHRIFT

(11) **EP 0 861 447 B1**
(45) Veröffentlichungstag und Bekanntmachung des Hinweises auf die Patenterteilung: **09.01.2002**
(21) Anmeldenummer: 96933437.4
(22) Anmeldetag: 01.10.1996
(51) Int. Cl.: G01V 1/00, G01H 3/08

(54) **VERFAHREN UND VORRICHTUNG ZUR DETEKTION VON FUSSGÄNGERN**
METHOD AND DEVICE FOR DETECTING PEDESTRIANS
PROCEDE ET DISPOSITIF POUR LA DETECTION DE PIETONS

(30) Priorität: 17.11.1995 DE 19542871
(43) Veröffentlichungstag der Anmeldung: 02.09.1998
(73) Patentinhaber: STN ATLAS Elektronik GmbH, 28305 Bremen (DE)
(72) Erfinder: BECKER, Gunnar, D-28199 Bremen (DE); KLEMP, Jürgen, D-28832 Achim (DE); HERMSTRÜWER, Günther, D-28832 Achim (DE); GÜDESEN, Alwin, D-28321 Morsum (DE); TUMMOSCHEIT, Günter, D-28876 Oyten (DE)
(74) Vertreter: Thul, Hermann, Dipl.-Phys.
(86) Internationale Anmeldenummer: EP9604285
(87) Internationale Veröffentlichungsnummer: WO9719368

(56) Entgegenhaltungen:
- EP-A- 0 654 676
- GB-A- 2 115 155
- US-A- 3 995 223
- US-A- 4 083 031
- US-A- 4 110 730

## Beschreibung

Die Erfindung betrifft ein Verfahren und eine Vorrichtung zur Detektion von Fußgängern, die einen Überwachungsort passieren, der im Oberbegriff des Anspruchs 1 bzw. des Anspruchs 9 definierten Gattung.

Bei einem bekannten Verfahren dieser Art (DE 42 37 721 Al), bei welchem neben Fußgängern noch weitere Verkehrsteilnehmer, wie Rad- und Kettenfahrzeuge, aufgrund der von ihnen abgestrahlten akustischen Energie detektiert und klassifiziert werden, ist für die Kategorie "Fußgänger" ein durch eine obere Grenzfrequenz festgelegter Frequenzbereich vorgegeben, innerhalb dessen aus dem Ausgangssignal des Geophons durch Hüllkurvendetektion ein Meßsignal gewonnen wird. Zusätzlich wird in einem für Hintergrundgeräusche charakteristischen Frequenzbereich aus dem Geophonausgangssignal durch Hüllkurvendetektion ein Referenzsignal gewonnen. Übersteigt der Pegel des Meßsignals den Pegel des Referenzsignals, so wird auf "Fußgänger" vorerkannt. Nachfolgend wird geprüft, ob innerhalb einer vorgegebenen Zeitspanne eine vorgegebene Anzahl von Vorerkennungen auftreten. Wird diese Anzahl erreicht oder überschritten, so wird die Vorerkennung als Detektionsergebnis durch Anzeige bestätigt, wird sie nicht erreicht, so wird die Vorerkennung gelöscht.

Bei einer bekannten Vorrichtung zur Detektion von in einen abgegrenzten Bereich eindringenden Personen (US 4,110,730) werden seismische Vibrationen im Boden, die von einer gehenden Person erzeugt werden, mittels eines Geophons aufgenommen und in elektrische Signale umgesetzt, die als Schrittsignaturen einer gehenden Person bezeichnet werden. Mittels eines Analog-Digital-Konverters mit adaptiver Schwelle werden die Schrittsignaturen in Digitalsignale gewandelt. Die Schwelle ist dabei so adaptiert, daß sie mit abnehmender Distanz zwischen dem Geophon und der Person angehoben wird. Die Ausgangssignale des Analog-Digital-Konverters werden einem Personenklassifikator zugeführt, der Fußschritte durch Abprüfen der Dauer zwischen den Schrittsignaturen erkennt. Die Fußschritte werden hochgezählt und bei Erreichen einer vorgegebenen Zahl werden die vom Geophon aufgenommenen seismischen Vibrationen als von einer gehenden Person hervorgerufen klassifiziert.

Ein bekanntes Dektionssystem zur Erkennung der Anwesenheit von motorisierten Einrichtungen (US 3,995,223) weist einen Akustiksensor (Mikrophon), einen Seismiksensor (Hydrophon) und einen Schallsender auf. Der Ausgang des Seismiksensors ist zusammen mit dem Ausgang des Akustiksensors einem AND-Glied zugeführt, das ein Tor in der Verbindung zwischen dem Ausgang des Akustiksensors und dem Schallsender in der Weise steuert, daß das Tor nur während Koinzidenz von seismischer und akustischer Detektion geöffnet wird.

Bei einer bekannten Einrichtung zur Detektion von Fahrzeugen (GB 2 115 155 A oder DE 33 06 155 C2) werden zum Zwecke einer gewichtsabhänigen Klassifizierung der Fahrzeuge ohne entfernungsbedingter Fehleinordnung als Sensoren ein Geophon und ein Hydrophon verwendet, deren Ausgangssignale in einer Schaltungsanordnung ausgewertet werden. Die Schaltungsanordnung weist hierzu einen Korrelator, einen Verhältnisschaltkreis und einen Vergleicher auf. Der Korrelator korreliert die elektrischen Signale, die aus den mittels des Mikrophons erfaßten Fahrzeuggeräusche abgeleitetet sind, mit den elektrischen Signalen, die aus den vom Fahrzeugausgehenden, mit dem Hydrophon erfaßten seismischen Wellen abgeleitetet sind, und ermittelt hieraus einerseits den Anteil der durch Einkopplung der akustischen Signale in den Boden erzeugten seismischen Signale und andererseits den Anteil der durch unmittelbaren mechanischen Kontakt des Fahrzeugs mit dem Boden erzeugten, als Rayleigh-Wellen übertragenen, seismischen Signale an dem mit dem Geophon erfaßten seismischen Gesamtsignal. Der Verhältnisschaltkreis erzeugt eine dem Verhältnis der aus der Rayleigh-Welle abgeleiteten seismischen Signale zu den akustisch eingekoppelten seismischen Signalen entsprechende elektrische Größe und im Vergleicher wird diese Größe mit einem Schwellwert verglichen. Sobald das Verhältnis den Schwellwert überschreitet, wird das Fahrzeug als schweres Fahrzeug klassifiziert.

Der Erfindung liegt die Aufgabe zugrunde, ein Verfahren und eine Vorrichtung zur Detektion von Fußgängern der eingangs genannten Art hinsichtlich Vergrößerung der Detektionssicherheit und Senkung der Falschalarmrate zu verbessern.

Die Aufgabe ist bei einem Verfahren der im Oberbegriff des Anspruchs 1 bzw. bei einer Vorrichtung der im Oberbegriff des Anspruchs 9 jeweils angegeben Gattung erfindungsgemäß durch die Merkmale im Kennzeichenteil des Anspruchs 1 bzw. des Anspruchs 9 gelöst.

Das erfindungsgemäße Verfahren hat den Vorteil, daß durch bessere Anpassung an die akustische Signatur von Fußgängern die Falschalarmrate erheblich verringert ist. Durch Hinzufügen eines Mikrophons und durch Eliminieren von Signaturen im Geophonausgangssignal, die auch im Mikrophonausgangssignal auftreten, werden solche Schallereignisse, z.B. entfernte Luftknalle, bei der Detektion von vorneherein ausgeschlossen, die im Medium Luft Schallimpulse erzeugen, die ihrerseits in den Erdboden einkoppeln und im Geophonausgangssignal eine ähnliche Signatur hervorrufen wie die Schritte eines Fußgängers. Die Detektionssicherheit wird dadurch angehoben, daß das Detektionsergebnis nicht mehr mit einer Ja/Nein-Entscheidung angezeigt, sondern hinsichtlich seiner Wahrscheinlichkeit bewertet wird, so daß der Operateur aufgrund des Wahrscheinlichkeitsgrades der Detektion nochmals die Zuverlässigkeit des Detektionsergebnisses ins eigene Kalkül einbeziehen kann.

Vorteilhafte Ausführungsformen des erfindungsgemäßen Verfahrens bzw. der erfindungsgemäßen Vorrichtung mit zweckmäßigen Ausgestaltungen und Verbesserungen der Erfindung ergeben sich aus den weiteren Ansprüchen.

Gemäß einer bevorzugten Ausführungsform der Erfindung wird für die Wahrscheinlichkeitsbewertung des Detektionsergebnisses anhand der Anzahl und Stärke der aus dem Geophonausgangssignal extrahierten Signalimpulse ein Konfidenzmaß bestimmt und angezeigt. Hierzu werden die Anzahl der Signalimpulse und deren Impulsstärken so miteinander verknüpft, daß das Konfidenzmaß sowohl mit zunehmender Impulszahl als auch mit zunehmendem Mittelwert der Impulsstärken anwächst und umgekehrt mit sinkender Impulszahl und sinkendem Mittelwert abnimmt.

Gemäß einer bevorzugten Ausführungsform der Erfindung wird das Konfidenzmaß mittels eines Leuchtbalken angezeigt, dessen leuchtende Erstreckungslänge entsprechend der Größe des Konfidenzmaßes eingestellt wird. In vorteilhafter Weise wird dabei die Beleuchtung des Leuchtbalkens für eine vorgegebene Zeitspanne von bzw. 10 - 60 s und die Spitze des Leuchtbalkens für eine darüber hinausgehende Zeitspanne von z.B. bis zu 5 min nach Erreichen seiner größten Erstreckungslänge aufrechterhalten. Diese Art der Anzeige ist besonders dann von Vorteil, wenn eine Wegstrecke von mehreren Überwachungsorten aus überwacht wird. Aus der zeitlichen Reihenfolge der Konfidenzmaßanzeige einschließlich einer Kurzzeithistorie können weitere Rückschlüsse aus dem Detektionergebnis gezogen werden.

Gemäß einer weiteren vorteilhaften Ausführungsform der Erfindung, werden zusätzlich die mittleren Pegel der Geophon- und Mikrophonausgangssignale angezeigt und mit einer dem Pegel entsprechenden Balkenlänge dargestellt. Dies ermöglicht eine zusätzliche Bewertung der aktuellen Situation. Werden z.B. sehr hohe Pegel angezeigt, so ist dies ein Hinweis, daß eine Detektion von Fußgängern nicht möglich ist.

Eine vorteilhafte Vorrichtung zur Durchführung des erfindungsgemäßen Verfahrens weist einen ersten und zweiten Signalverarbeitungskanal auf, die jeweils an dem am Überwachungsort ausgebrachten Geophon bzw. Mikrophon angeschlossen sind und Zeitstücke der digitalen normalisierten Kurzzeitleistung der Geophon- bzw. Mikrophon-Ausgangssignale bilden, in denen das breite Hintergrundgeräusch auf den Wert "1" normiert ist. An dem ersten Signalverarbeitungskanal ist ein Impulsdetektor, z.B. ein Schwellwertdetektor, und am zweiten Signalverarbeitungskanal ein Impulseliminator angeschlossen, der zusätzlich mit dem Impulsdetektor verbunden ist und für die Dauer der einzelnen von dem Impulsdetektor ausgegebenen Leistungsimpulse die Kurzzeitleistung des Geophonausgangssignals auf den Wert "1" setzt. Dem Impulseliminator ist ein Impulsextraktor nachgeschaltet, der aus den am Ausgang des Impulseliminators anstehenden bereinigten Zeitstücken der Kurzzeitleistung des Geophonausgangssignals eine vorgegebene maximale Anzahl der größten Leistungsimpulse extrahiert. An dem Ausgang des Impulsextraktors ist ein Konfidenzrechner angeschlossen, der aus der Zahl der extrahierten Leistungsimpulse und deren mittlere Impulsleistung das Konfidenzmaß bestimmt und das innerhalb eines Zeitstücks erreichte Konfidenzmaß-Maximum ermittelt. Eine dem Konfidenzrechner nachgeschaltete Anzeigeeinheit stellt das Konfidenzmaximum dar.

Die Erfindung ist anhand eines in der Zeichnung dargestellten Ausführungsbeispiels einer Vorrichtung zur Detektion von Fußgängern, die einen Überwachungsort im Abstand passieren, im folgenden näher beschrieben. Es zeigen:
- Fig. 1: ein Blockschaltbild einer Vorrichtung zur Detektion von Fußgängern,
- Fig. 2: ein Blockschaltbild eines Konfidenzrechners in der Detektionsvorrichtung gem. Fig.1,
- Fig. 3: ein Diagramm der in Speichern des Konfidenzrechners der Fig.2 abgespeicherten Funktionen von Konfidenzmaß und Mittelwert der Kurzzeitleistung,
- Fig. 4: ein Displaybild einer Anzeigeeinheit der Detektionsvorrichtung gem. Fig.1.

Mit dem nachfolgend beschriebenen Detektionsverfahren werden Fußgänger detektiert, die einen Überwachungsort in einem mehr oder weniger großen Abstand passieren. Hierzu sind am Überwachungsort ein Geophon 10 und ein Mikrophon 11 ausgebracht, wobei das Geophon 10 an den Erdboden angekoppelt, vorzugsweise eingegraben, und das Mikrophon mit etwas Abstand vom Boden aufgestellt wird.

Die Ausgangssignale von Geophon 10 und Mikrophon 11 werden - wie bei der Beschreibung der Detektionsvorrichtung noch ausführlicher dargelegt wird - in herkömmlicher Signalverarbeitungstechnik zur Erzeugung der kontinuierlichen Kurzzeitleistung analog vorverarbeitet. Zeitstücke der kontinuierlichen Kurzzeitleistung endlicher Länge werden abgetastet, wobei die Abtastung sowohl kontinuierlich für sich überlappende Zeitstücke oder getriggert für einzelne Zeitstücke erfolgen kann. Die weitere digitale Vorverarbeitung sieht dann die Normalisierung der Kurzzeitleistungen der beiden Ausgangssignale vor. Hierfür können herkömmliche Normalisierungsverfahren eingesetzt werden. Ein Beispiel für ein solches Normalisierungsverfahren ist in der DE 30 35 757 C2 beschrieben. Durch die Normalisierung wird das breite Hintergrundgeräusch im gesamten Zeitstück auf den Wert "1" normiert, wobei die Impulse entsprechend dem lokalen Signal-Stör-Verhältnis erhalten bleiben.

Ausgehend von der aus den Ausgangssignalen von Geophon 10 und Mikrophon 11 jeweils gewonnenen normalisierten Kurzzeitleistung, im folgenden vereinfacht Geophon-Kurzzeitleistung bzw. Mikrophon-Kurzzeitleistung genannt, werden in einem ersten Verfahrensschritt des erfindungsgemäßen Verfahrens Leistungsspitzen oder Leistungsimpulse in der Mikrophon-Kurzzeitleistung für vorgegebenen Zeitstücke fortlaufend detektiert. In dem nachfolgenden Verfahrensschritt werden dann in der Geophon-Kurzzeitleistung Leistungsspitzen oder Leistungsimpulse an denjenigen Stellen eliminiert, an denen in gleichen Zeitstücken der Mikrophon-Kurzzeitleistung Leistungsimpulse auftreten. Diese Eliminierung erfolgt in der Weise, daß an den genannten Stellen des Auftretens von Leistungsimpulsen in den zugeordneten Zeitstücken die Geophon-Kurzzeitleistung auf den Wert "1" gesetzt wird. In jedem der durch diese Impulselimination bereinigten Zeitstücke der Geophon-Kurzzeitleistung wird nunmehr eine vorgegebene maximale Zahl der größten Leistungsimpulse extrahiert, beispielsweise die sechzehn größten Leistungsimpulse, die in der Reihenfolge sinkender Leistung ausgelesen werden. Mittels dieser extrahierten Leistungsimpulse wird die Wahrscheinlichkeit der Detektion von Fußgängern bewertet und nachfolgend angezeigt.

Für die Wahrscheinlichkeitsbewertung wird dabei anhand der Anzahl und Stärke der extrahierten Leistungsimpulse ein Konfidenzmaß bestimmt und angezeigt. Dabei werden die Anzahl der Leistungsimpulse und deren Impulsstärke so miteinander verknüpft, daß das Konfidenzmaß sowohl mit zunehmender Impulszahl als auch mit zunehmendem Mittelwert der Impulsleistung anwächst und umgekehrt mit sinkender Impulszahl und sinkendem Mittelwert abnimmt, wobei der obere Endwert des Konfidenzmaßes mit "1" und der untere Endwert mit "0" angegeben wird. Das Konfidenzmaß wird mittels eines Leuchtbalkens angezeigt, dessen leuchtende Erstreckungslänge entsprechend der Größe des Konfidenzmaßes eingestellt wird. Gleichzeitig wird die Aktualität des durch den Leuchtbalken angezeigten Konfidenzmaßes durch die Leuchtstärke und/oder durch die Farbe des Leuchtbalkens verdeutlicht. Beispielsweise wird der Leuchtbalken in seiner das aktuelle, d. h. während der letzten 10 s, anstehende Konfidenzmaß anzeigenden Erstreckungslänge hell und in seiner das vergangene Konfidenzmaß, dessen Bestimmung 10 bis 60 s zurückliegt, anzeigenden Erstreckungslänge dunkel dargestellt. Zusätzlich wird fortlaufend der innerhalb der zurückliegenden letzten 5 min aufgetretene größte Wert des Konfidenzmaßes, der die vom Leuchtbalken erreichte größte Erstreckungslänge bestimmt, als besonders leuchtstark hervorgehobene Leuchtmarkierung angezeigt. Diese Leuchtmarkierung tritt immer an der Spitze des Leuchtbalkens auf, wenn sich das aktuelle Konfidenzmaß stetig vergrößert und trennt sich vom Leuchtbalken, wenn sich das Konfidenzmaß zunehmend reduziert. Konfidenzmaße mit einem Zeitraum von älter als 5 min erscheinen nicht mehr im Display. Da die Darstellung der zeitlich aufeinanderfolgenden Konfidenzmaße mit dem gleichen Leuchtbalken vorgenommen wird, werden die zeitlich aufeinanderfolgenden Anzeigen überschrieben, und zwar nur für die das aktuelle Konfidenzmaß darstellende Erstreckungslänge des Leuchtbalkens. Ist das alte Konfidenzmaß größer als das aktuelle, so bleibt das alte Konfidenzmaß als dunkler Balkenabschnitt sichtbar.

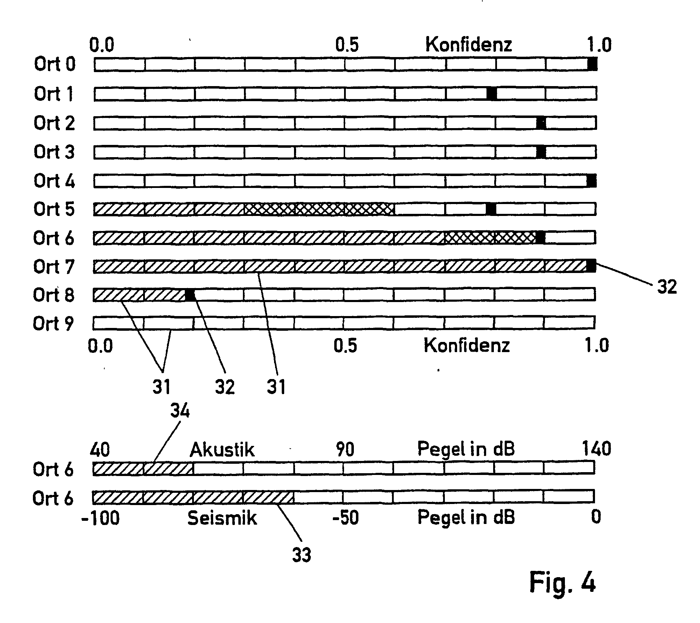

Dieser Vorgang der Leuchtbalkenanzeige ist in Fig. 4 illustriert, wobei z. B. auf den Leuchtbalken für den Ort "5" verwiesen wird. Der Fußgänger hat den Ort "5" bereits passiert und befindet sich am Ort "7". Das aktuelle Konfidenzmaß, das am Ort "5" erfaßt wird, hat den Wert 0,3. Entsprechend ist die Erstreckungslänge des hell leuchtenden Leuchtbalkens eingestellt, was in Fig. 4 durch Schraffur angedeutet ist. Das Konfidenzmaß, das am Ort "5" innerhalb der letzten 60 s gemessen wurde, war natürlich größer, da der Fußgänger sich zu diesem Zeitpunkt näher am Ort "5" befunden hat, und betrug beispielsweise 0,6. Entsprechend lang ist der dunkel leuchtende Abschnitt des Leuchtbalkens, was in Fig. 4 durch Kreuzschraffierung verdeutlicht ist. Vor etwa 3 min hat der Fußgänger den Ort "5" passiert. Das zu diesem Zeitpukt bestimmte Konfidenzmaß war der größte gemessene Wert des Konfidenzmaßes und betrug z. B. 0,8. Dieser größte Wert des Konfidenzmaßes, der weniger als 5 min zurückliegt, ist noch als Leuchtmarkierung (in Fig. 4 geschwärzt) zu sehen und erlischt erst nach einer Zeitspanne von 5 min nach seinem ersten Auftreten. Zusätzlich werden noch die mittleren Pegel der Geophon- und Mikrophonausgangssignale angezeigt, und zwar wiederum als Leuchtbalken mit einer dem Pegel entsprechenden Balkenlänge.

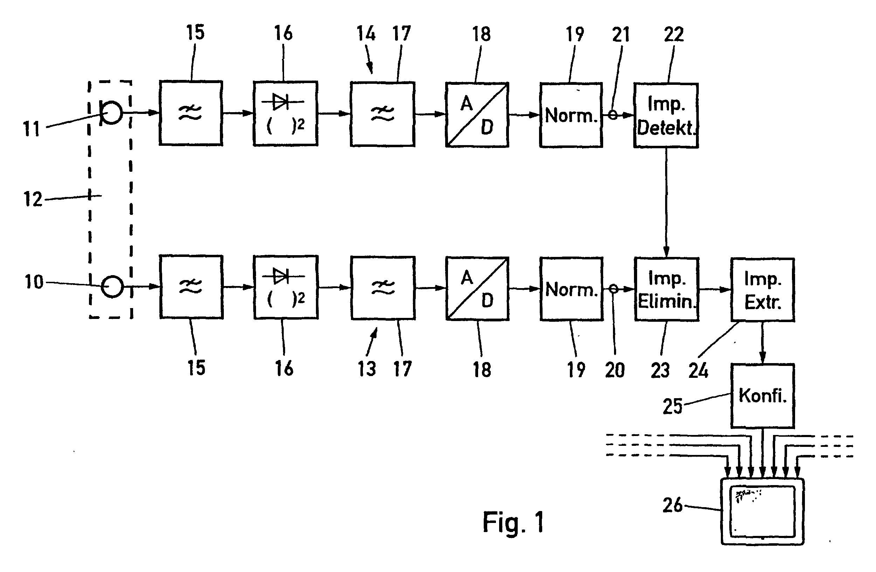

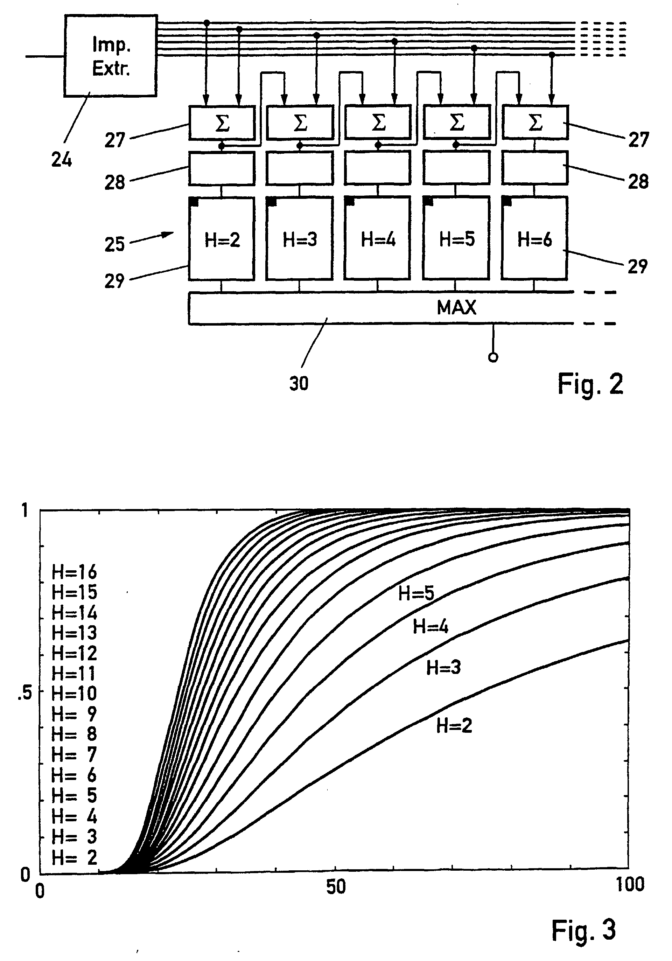

Zur Durchführung des vorstehend beschriebenen Detektionsverfahrens weist die in Fig.1 im Blockschaltbild dargestellte Detektionsvorrichtung ein Geophon 10 und ein Mikrophon 11 auf. Geophon 10 und Mikrophon 11 sind in der beschriebenen Weise am Überwachungsort 12 ausgebracht. Dem Geophon 10 ist ein erster Signalverarbeitungskanal 13 und dem Mikrophon 11 ist ein zweiter Signalverarbeitungskanal 14 nachgeschaltet. Beide Signalverarbeitungkanäle 13,14 sind identisch aufgebaut. Eine analoge Signalvorverarbeitung in jedem Signalverarbeitungskanal 13, 14 umfaßt ein Tiefpaßfilter 15 mit einer oberen Grenze von ca. 1 kHz, einen Gleichrichter 16, der hier ein quadratischer Gleichrichter ist, aber auch ein linearer Gleichrichter sein kann, und ein Leistungsfilter 17, das die Hüllkurve des Signals herausfiltert. Für die digitale Weiterverarbeitung wird ein Zeitstück endlicher Länge (Größenordnung 5 s bis 10 s) der kontinuierlichen Kurzzeitleistung abgetastet und anschließend normalisiert. Hierzu ist ein Analog-Digital-Wandler 18 und eine Normalisierungseinheit 19 vorgesehen. In der Normalisierungseinheit 19, die beispielsweise in der DE 30 35 757 C2 dargestellt und beschrieben ist, wird im gesamten Zeitstück das breite Hintergrundgeräusch auf den Wert "1" normiert, wobei die Leistungsimpulse entsprechend dem lokalen Nutz-Stör-Verhältnis erhalten bleiben. Am Ausgang 20 bzw. 21 des ersten bzw. zweiten Signalverarbeitungskanals 13 bzw. 14 steht damit jeweils die digitale normalisierte Kurzzeitleistung der Geophon- bzw. Mikrophon-Ausgangssignale an. Im folgenden werden die Ausgangssignale am Ausgang 20 des ersten Signalverarbeitungskanals 13 als Geophon-Kurzzeitleistung und die Ausgangssignale am Ausgang 21 des zweiten Signalverarbeitungskanals 14 als Mikrophon-Kurzzeitleistung bezeichnet. Am Ausgang 21 des zweiten Signalverarbeitungskanals 14 ist ein Impulsdetektor 22 und am Ausgang 20 des ersten Signalverarbeitungskanals 13 ist ein Impulseliminator 23 angeschlossen, dessen zweiter Eingang mit dem Ausgang des Impulsdetektors 22 verbunden ist. Der Impulsdetektor 22, der beispielsweise als einfacher Schwellwertdetektor ausgeführt werden kann, detektiert in jedem Zeitstück der Mikrophon-Kurzzeitleistung vorhandene Leistungsimpulse, die eine vorgegebene Schwelle übersteigen und legt diese Impulse an den zweiten Eingang des Impulseliminators 23. Der Impulseliminator 23, dem über seinen ersten Eingang die Geophon-Kurzzeitleistung zugeführt wird, eliminiert nunmehr in der Geophon-Kurzzeitleistung die Leistungsimpulse, die an denjenigen Stellen des zugeordneten Zeitstücks auftreten, an welchen ebenfalls Leistungsimpulse über den zweiten Eingang vom Impulsdetektor 22 anstehen. Diese Eliminierungen der Leistungsimpulse in der Geophon-Kurzzeitleistung erfolgt in der Weise, daß an den genannten Stellen des Auftretens von Impulsen am zweiten Eingang des Impulseliminators die Geophon-Kurzzeitleistung auf den Wert "1" gesetzt wird. Die so bereinigten Zeitstücke der Geophon-Kurzzeitleistung gelangen zu dem dem Impulseliminator 23 nachgeschalteten Impulsextraktor 24, dem ein Konfidenzrechner 25 nachgeordnet ist. Der Ausgang des Konfidenzrechners 25 ist an den Eingang einer Anzeigeeinheit 26 gelegt. Impulsextraktor 24 und Konfidenzrechner 25, der in Figur 2 detaillierter dargestellt ist, arbeiten nunmehr wie folgt:

Der Impulsextraktor 24 extrahiert aus jedem Zeitstück des von dem Impulseliminator 23 gelieferten bereinigten Zeitstücks der Geophon-Kurzzeitleistung eine vorgegebene maximale Anzahl der größten im Zeitstück auftretenden Leistungsimpulse. Bei dem in Fig. 2 dargestellten Impulsextraktor 24 ist diese Impulsanzahl auf H = 16 festgelegt. Der Impulsextraktor 24 weist daher sechzehn Ausgänge auf, wobei am ersten Ausgang der größte Leistungsimpuls, am zweiten Ausgang der zweitgrößte Leistungsimpuls, am dritten Ausgang der drittgrößte Leistungsimpuls, usw. anstehen. Werden weniger als die vorgegebene maximale Anzahl von Leistungsimpulsen detektiert, so bleiben die übrigen Ausgänge des Impulsextraktors 24 unbelegt. Der Konfidenzrechner 25 bildet anhand der Anzahl der Leistungsimpulse und ihrer mittleren Impulsleistung ein Konfidenzmaß, das in der Anzeigeeinheit 26 angezeigt wird. Hierzu weist der Konfidenzrechner 25 eine Anzahl Addierer oder Summierer 25, von Mittelwertbildner 28 und Speicher 29 sowie einen Maximumsucher 30 auf. Jeder Summierer 27 hat zwei Eingänge und einen Ausgang, wobei der in der Reihenfolge erste Summierer 27 an dem ersten und zweiten Ausgang des Impulsextraktors 24 angeschlossen ist. Jeder weitere Summierer 27 ist mit seinem einen Eingang an dem vorausgehenden Summierer 27 und mit seinem anderen Ausgang an dem nächstfolgenden Ausgang des Impulsextraktors 24 angeschlossen. So ist der zweite Summierer 27 einerseits an dem Ausgang des ersten Summierers 27 und andererseits an dem dritten Ausgang des Impulextraktors 24, der dritte Summierer 27 einerseits an dem Ausgang des zweiten Summierers 27 und andererseits an dem vierten Ausgang des Impulsextraktors 24, usw. angeschlossen. Jeder Ausgang der Summierer 27 ist zusätzlich mit einem Mitttelwertbildner 28 verbunden, der den arithmetischen Mittelwert der an seinem Eingang liegenden Leistungssumme zweier Leistungsimpulse bildet. Im einfachsten Fall ist jeder Mittelwertbildner ein Dividierer, der seine Eingangsgröße durch die Anzahl der an der Eingangsgröße beteiligten Impulse dividiert. Der in Fig.2 in der Reihenfolge erste Mittelwertbildner 28 dividiert damit durch zwei, der nachfolgende durch drei, der nächste durch vier, usw. Jedem Mittelwertbildner 28 ist ein Speicher 29 nachgeschaltet, in dem eine Funktion des Konfidenzmaßes über der mittleren Leistung abgespeichert ist. Diese Funktionen sind im Diagramm der Fig.3 beispielhaft skizziert. Die unterste Funktion ist dabei der Impulszahl H = 2 zugeordnet und damit im ersten Speicher 29 abgelegt, die darüberliegende Funktion ist der Impulszahl H = 3 zugeordnet und damit im zweiten Speicher 29 abgelegt, die darüberliegende Funktion ist der Impulszahl H = 4 zugeordnet und damit im dritten Speicher 29 abgelegt, usw. Wie aus dem Diagramm der Fig.3 ersichtlich ist, steigt das Konfidenzmaß, dessen unterer Endwert "0" und dessen oberer Endwert "1" beträgt, sowohl mit zunehmender Impulszahl als auch mit zunehmendem Mittelwert der Leistung an. Entsprechend dem an seinem Eingang anliegenden Mittelwert der Leistung gibt jeder Speicher an seinem Ausgang ein entsprechendes Konfidenzmaß aus. Der Maximumsucher 30 ermittelt aus der Anzahl der an seinen sechzehn Eingängen anliegenden Konfidenzmaße das Maximum und gibt dieses zur Anzeige an die Anzeigeeinheit 26.

Im Display der Anzeigeheinheit 26 wird das vom Maximumsucher 30 gelieferte Konfidenzmaß-Maximum fortlaufend in Form eines Leuchtbalkens 31 angezeigt, wobei die Erstreckungslänge des Leuchtbalkens 31 dem momentan vom Maximumsucher 30 ausgegebenen Konfidenzmaß-Maximum entspricht. Eine solche aktuelle Leuchtbalkendarstellung ist in Fig.4 skizziert, beispielsweise dort für den "Ort 7". Die Spitze des Leuchtbalkens 31 hat eine andersfarbige Leuchtmarkierung 32, deren zeitliche Leuchtdauer sich über eine vorgegebene Zeitdauer der Beleuchtung des Leuchtbalkens 31 hinaus erstreckt. Auf dem in Fig. 4 dargestellten Display der Anzeigeeinheit 26 werden insgesamt zehn Leuchtbalken 31 für jeweils einen von zehn Überwachungsorten dargestellt, die an einer zu überwachenden Wegstrecke in aufsteigender Reihenfolge angeordnet sind. Der Abstand der einzelnen Überwachungsorte beträgt dabei etwa 10 m. An jedem Überwachungsort sind, wie vorstehend beschrieben, jeweils ein Geophon 10 und ein Mikrophon 11 ausgebracht, deren Ausgangssignale jeweils in der gleichen Weise wie vorstehend beschrieben bearbeitet werden. Entsprechend werden der Anzeigeeinheit 26 über zehn verschiedene Eingänge jeweils ein Konfidenzmaß-Maximum von einem einem Überwachungsort zugeordneten Konfidenzrechner 25 zugeführt, wie dies in Fig. 1 zusätzlich angedeutet ist. In dem in Fig. 4 dargestellten Beispiel hat ein Fußgänger die Orte "'0" bis "6" passiert und befindet sich jetzt am Ort "7". Zu aufeinanderfolgenden Zeitpunkten, deren ältester bis zu 5 min zurückliegt, hat der Konfidenzrechner 25 für den Ort "0" ein größtes Konfidenzmaß-Maximum von 1.0, der Konfidenzrechner 25 für den Ort "1" ein größtes Konfidenzmaß-Maximum von 0,8, usw. ermittelt, wie dies anhand der in Fig. 4 schwarz eingezeichneten Leuchtmarkierungen 32 zu erkennen ist. Diese größten Werte der Konfidenzmaß-Maxima wurden in einer Zeitspanne ausgegeben, die mehr als eine Minute bis zu fünf Minuten zurückliegt. Am Ort "6" und am Ort "7" wird nicht nur die den größten Wert des Konfidenzmaß-Maximums symbolisierende Leuchtmarkierung 32 angezeigt, sondern auch der Leuchtbalken 31 beleuchtet, da die Ausgabe des Konfidenzmaß-Maximums weniger als eine Minute zurückliegt. Der Leuchtbalken 31 für den Ort "6" leuchtet dabei im hinteren Abschnitt dunkel (Kreuzschraffur), da ein höherer Wert des ermittelten Konfidenzmaß-Maximums vor mehr als 10 s bestimmt wurde, und im vorderen Abschnitt hell (Schraffur), da die Bestimmung des kleineren Wertes des Konfidenzmaß-Maximums weniger als 10 s zurückliegt. Das gleiche gilt für den den Ort "8" markierenden Leuchtbalken 31, der ebenso wie der Leuchtbalken 31 für den Ort "7" eine aktuelle Messung darstellt und daher für eine Zeitspanne bis zu 10 s hell leuchtet.

Die zeitabhängige graphische Darstellung des Konfidenzmaßes an verschiedenen Überwachungsorten ermöglicht eine leichte Erfassung der komplexen Situation bei der Überwachung in kompakter, leicht interpretierbarer Form. Durch die Verknüpfung von zeitlicher und örtlicher Anzeige der Konfidenzmaße können auf einen Blick auch schwache Ziele detektiert und von einzelnen Falschalarmen unterschieden werden.

Wie in Fig. 4 unten dargestellt ist, sind im Display der Anzeigeeinheit 26 noch zwei Leuchtbalken 33, 34 vorgesehen, mit welchen der Pegel der Ausgangssignale von Geophon 10 und Mikrophon 11 dargestellt wird. Die Erstreckungslänge der Leuchbalken 33, 34 entspricht wiederum der Pegelgröße. Diese Darstellung erfolgt für jeweils einen ausgewählten Überwachungsort, vorzugsweise für denjenigen Überwachungsort, in welchem die Konfidenzmaßanzeige die aktuelle und damit weniger als 10 s alt ist. Die Darstellung des akustischen und seismischen Pegels gibt zusätzlichen Aufschluß über die Detektionssicherheit, da bei sehr hohen Pegeln davon ausgegangen werden kann, daß die Detektion von Fußgängern nicht möglich ist.

Die Erfindung ist nicht auf das vorstehend beschriebene Ausführungsbeispiel beschränkt. So ist es nicht unbedingt notwendig, durch die Signalverarbeitung die Kurzzeitleistungen der Ausgangssignale von Geophon 10 und Mikrophon 11 zu bilden. Das erfindungsgemäße Detektionsverfahren kann auch auf die Amplituden oder Pegel der Ausgangssignale des Geophons 10 und Mikrophons 11 angewendet werden.

Bei der Anzeige kann eine feinere Stufung in der Leuchtstärke der Leuchtbalken vorgenommen werden, beispielsweise sehr hell, hell, mittel, schwach, sehr schwach, dunkel, so daß dem Alter des ermittelten Konfidenzmaßes ein feineres Zeitraster zugeordnet werden kann. Anstelle der Leuchstärke kann auch eine Leuchtfarbe abgestuft oder unterschiedliche Farben verwendet werden.

## Patentansprüche

1. Verfahren zur Detektion von einen Überwachungsort passierenden Fußgängern unter Verwendung eines am Überwachungsort installierten Geophons mit nachgeschalteter Signalverarbeitung, **dadurch gekennzeichnet, daß** am Überwachungsort zusätzlich ein Mikrophon ausgebracht wird, daß in den signaltechnisch geeignet vorverarbeiteten Ausgangssignalen des Mikrophons fortlaufend für vorgegebene Zeitstücke Signalspitzen oder -impulse detektiert werden, daß in den gleichermaßen vorverarbeiteten Ausgangssignalen des Geophons Signalspitzen oder -impulse an denjenigen Stellen eliminiert werden, an denen in gleichen Zeitstücken des Mikrophonausgangssignals Signalimpulse auftreten, daß in den durch diese Impulselimination bereinigten Zeitstücken des Geophonausgangssignals eine vorgegebene maximale Zahl der größten Signalimpulse extrahiert wird und daß mittels der extrahierten Signalimpulse die Wahrscheinlichkeit einer Fußgängerdetektion bewertet und angezeigt wird.

2. Verfahren nach Anspruch 1, **dadurch gekennzeichnet, daß** für die Wahrscheinlichkeitsbewertung der Fußgängerdetektion anhand der Anzahl und Stärke der extrahierten Signalimpulse ein Konfidenzmaß bestimmt und angezeigt wird.

3. Verfahren nach Anspruch 2, **dadurch gekennzeichnet, daß** zur Bestimmung des Konfidenzmaßes die Anzahl der Signalimpulse und deren Impulsstärke so miteinander verknüpft werden, daß das Konfidenzmaß sowohl mit zunehmender Impulszahl als auch mit zunehmendem Mittelwert der Impulsstärken anwächst und umgekehrt mit sinkender Impulszahl und sinkendem Mittelwert abnimmt, und vorzugsweise daß der obere Endwert des Konfidenzmaßes mit "1" und der untere Endwert mit "0" angegeben wird.

4. Verfahren nach Anspruch 2 oder 3, **dadurch gekennzeichnet, daß** das Konfidenzmaß mittels eines Leuchtbalkens angezeigt wird, dessen leuchtende Erstreckungslänge entsprechend der Größe des Konfidenzmaßes eingestellt wird.

5. Verfahren nach Anspruch 4, **dadurch gekennzeichnet, daß** zeitlich aufeinanderfolgend bestimmte Konfidenzmaße mit dem gleichen Leuchtbalken angezeigt werden.

6. Verfahren nach Anspruch 5, **dadurch gekennzeichnet, daß** die Leuchtstärke und/oder Leuchtfarbe des Leuchtbalkens abhängig vom Alter der Konfidenzmaßbestimmung unterschiedlich eingestellt werden.

7. Verfahren nach Anspruch 6, **dadurch gekennzeichnet, daß** die Beleuchtung des gesamten Leuchtbalkens für eine vorgegebene Zeitspanne (bis ca. 60 s) aufrechterhalten wird und danach lediglich das durch eine Leuchtmarkierung gekennzeichnete Ende der vom Leuchtbalken erreichten größten Erstreckungslänge für eine demgegenüber viel größere Zeitspanne (bis ca. 5 min) beleuchtet wird.

8. Verfahren nach einem der Ansprüche 1 bis 7, **dadurch gekennzeichnet, daß** zusätzlich die mittleren Pegel der Geophon- und Mikrophonausgangssignale angezeigt und vorzugsweise als Leuchtbalken mit einer dem Pegel entsprechenden Erstreckungslänge dargestellt werden.

9. Verfahren nach einem der Ansprüche 1 bis 8, **dadurch gekennzeichnet, daß** zur Vorverarbeitung der Ausgangssignale von Geophon und Mikrophon die digitale Kurzzeitleistung der Ausgangssignale gebildet und diese normalisiert wird und daß die Signalimpulsdetektion, -elimination und -extraktion in Zeitstücken der normalisierten Kurzzeitleistung der Ausgangssignale durchgeführt wird.

10. Verfahren nach Anspruch 9, **dadurch gekennzeichnet, daß** zur Elimination der Signalimpulse die normalisierte Kurzzeitleistung des Geophonausgangssignals an den Stellen der im zugeordneten Zeitstück der normalisierten Kurzzeitleistung des Mikrophonausgangssignals detektierten Leistungsspitzen oder -impulse und für deren Dauer auf den Wert "1" gesetzt wird.

11. Vorrichtung zur Detektion von einen Überwachungsort passierenden Fußgängern mit einem am Überwachungsort ausgebrachten Geophon (10) mit nachgeschaltetem Signalverarbeitungskanal (13), **gekennzeichnet durch** ein zusätzlich am Überwachungsort (12) ausgebrachtes Mikrophon (11) mit nachgeschaltetem Signalverarbeitungskanal (14), wobei der dem Geophon (10) nachgeschaltete erste Signalverarbeitungskanal (13) und der dem Mikrophon (11) nachgeschaltete zweite Signalverarbeitungskanal (14) so ausgebildet sind, daß sie jeweils Zeitstücke der digitalen, normalisierten Kurzzeitleistung der Geophon- bzw. Mikrophonausgangssignale bilden, **durch** einen dem zweiten Signalverarbeitungskanal (14) nachgeschalteten Impulsdetektor (22), **durch** einen eingangsseitig am ersten Signalverarbeitungskanal (13) und am Impulsdetektor (22) angeschlossenen Impulseliminator (23), der für die Dauer der vom Impulsdetektor (22) ausgegebenen Leistungsimpulse die Kurzzeitleistung des Geophonausgangssignals auf den Wert "1" setzt, **durch** einen mit dem Ausgang des Impulseliminators (23) verbundenen Impulsextraktor (24), der aus den am Ausgang des Impulseliminators ( 23) anstehenden bereinigten Zeitstücken der Kurzzeitleistung des Geophonausgangssignals eine vorgegebene maximale Anzahl der größten Leistungsimpulse extrahiert, **durch** einen an dem Ausgang des Impulsextraktors (24) angeschlossenen Konfidenzrechner (25), der aus der Zahl der extrahierten Leistungsimpulse und deren mittleren Impulsleistung ein Konfidenzmaß bestimmt und das innerhalb eines Zeitstücks erreichte Konfidenzmaß-Maximum ermittelt, und **durch** eine dem Konfidenzrechner (25) nachgeschaltete Anzeigeeinheit (26), die das Konfidenzmaß-Maximum darstellt.

12. Vorrichtung nach Anspruch 11, **dadurch gekennzeichnet, daß** der Impulsextraktor (24) eine der vorgegebenen maximalen Impulszahl entsprechende Anzahl von Ausgängen aufweist, an denen die extrahierten Leistungsimpulse ihrer Größe nach geordnet anstehen, daß der Konfidenzrechner (25) eine Mehrzahl von Summierern (27) aufweist, von denen der erste Summierer (27) eingangsseitig an die beiden ersten Ausgänge des Impulsextraktors (24) angeschlossen sind und die anderen Summierer (27) jeweils mit einem Eingang an dem vorausgehenden Summierer (27) und mit dem anderen Eingang an einem der folgenden Ausgänge des Impulsextraktors (24) angeschlossen sind, daß am Ausgang eines jeden Summierers (27) ein Mittelwertbildner (28) angeschlossen ist, daß jedem Mittelwertbildner (28) ein Speicher (29) nachgeschaltet ist, in dem für jeweils eine Impulszahl das Konfidenzmaß als Funktion des Mittelwerts der Impulsleistungen abgelegt ist, und daß die Ausgänge der Speicher (29) mit einem Maximumsucher (30) verbunden sind, der an seinem Ausgang den größten der an den Speicherausgängen anstehenden Konfidenzmaßwerte ausgibt.

13. Vorrichtung nach Anspruch 11 oder 12, **dadurch gekennzeichnet, daß** die Anzeigeeinheit (26) ein Display mit mindestens einem Leuchtbalken (31) aufweist, dessen Länge entsprechend dem an dem Ausgang des Maximumsuchers (30) momentan ausgegebenen Konfidenzmaß-Maximums eingestellt ist.

14. Vorrichtung nach Anspruch 13, **dadurch gekennzeichnet, daß** der Leuchtbalken (31) mit einer dem Altersrang der Ausgabe des Konfidenzmaß-Maximums entsprechenden Leuchtstärke und/oder Farbe und/oder Farbstufung für eine maximal vorgegebene Zeitspanne (bis ca. 60 s) sichtbar bleibt.

15. Vorrichtung nach Anspruch 14, **dadurch gekennzeichnet, daß** das Ende der innerhalb einer darüber hinausgehenden, weiteren, maximal vorgegebenen Zeitspanne (bis ca. 5 min) von dem Leuchtbalken (31) erreichten Erstreckungslänge als Leuchtmarkierung (32) sichtbar ist.

16. Vorrichtung nach einem der Ansprüche 13 bis 15, **dadurch gekennzeichnet, daß** längs einer zur überwachenden Wegstrecke mehrere Überwachungsorte (12) vorgesehen sind, daß im Display der Anzeigeeinheit (26) für jeden Überwachungsort (12) ein Leuchtbalken (31) vorhanden ist und daß die Leuchtbalken (31) parallel zueinander untereinander und in einer der Reihenfolge der Überwachungsorte (12) entsprechenden Anordnung angeordnet sind.

## Claims

1. Method for detecting pedestrians passing a surveillance point, using a geophone installed at the surveillance point with downstream signal processing, **characterized in that** a microphone is additionally set up at the surveillance point, **in that** signal peaks or pulses are continuously detected for predetermined time segments in the output signals of the microphone suitably preprocessed in signalling terms, **in that** signal peaks or pulses in the output signals of the geophone preprocessed in the same way are eliminated at those points at which signal pulses occur in the same time segments of the microphone output signal, **in that** a predetermined maximum number of the greatest signal pulses are extracted in the time segments of the geophone output signal cleaned up by this pulse elimination and **in that** the probability of pedestrian detection is assessed by means of the extracted signal pulses and is indicated.

2. Method according to Claim 1, **characterized in that**, for the probability assessment of pedestrian detection, the number and strength of the signal pulses extracted are used as a basis to determine and indicate a confidence measure.

3. Method according to Claim 2, **characterized in that**, for determining the confidence measure, the number of signal pulses and their pulse strength [sic] are combined with one another in such a way that the confidence measure increases both as the number of pulses increases and as the mean value of the pulse strengths increases and, conversely, decreases with a falling number of pulses and a falling mean value, and preferably **in that** the upper end value of the confidence measure is specified as "1" and the lower end value is specified as "0".

4. Method according to Claim 2 or 3, **characterized in that** the confidence measure is indicated by means of a luminous bar, the luminous extent of which is set according to the size of the confidence measure.

5. Method according to Claim 4, **characterized in that** the same luminous bar is used to indicate the confidence measures determined at successive times.

6. Method according to Claim 5, **characterized in that** the luminosity and/or luminous colour of the luminous bar are set differently according to the age of the confidence measure determination.

7. Method according to Claim 6, **characterized in that** the illumination of the entire luminous bar is maintained for a predetermined time period (up to approximately 60 s) and after that only the end of the greatest extent reached by the luminous bar, identified by a luminous marking, is illuminated for a comparatively much greater time period (up to approximately 5 min).

8. Method according to one of Claims 1 to 7, **characterized in that** the average levels of the geophone and microphone output signals are additionally indicated and preferably represented as a luminous bar with an extent corresponding to the level.

9. Method according to one of Claims 1 to 8, **characterized in that**, for the preprocessing of the output signals of the geophone and microphone, the digital short-time power of the output signals is formed and is normalized and **in that** the signal pulse detection, elimination and extraction is carried out in time segment of the normalized short-time power of the output signals.

10. Method according to Claim 9, **characterized in that**, for the elimination of the signal pulses, the normalized short-time power of the geophone output signal is set to the value "1" at the points of the power peaks or pulses detected in the assigned time segment of the normalized short-time power of the microphone output signal and for the duration of said peaks or pulses.

11. Device for detecting pedestrians passing a surveillance point, with a geophone (10) set up at the surveillance point and with a downstream signal processing channel (13), **characterized by** a microphone (11), which is additionally set up at the surveillance point (12) and has a downstream signal processing channel (14), the first signal processing channel (13), connected downstream of the geophone (10), and the second signal processing channel (14), connected downstream of the microphone (11), being designed such that they in each case form time segments of the digital, normalized short-time power of the geophone and microphone output signals, respectively, by a pulse detector (22), which is connected downstream of the second signal processing channel (14), by a pulse eliminator (23), which is connected on the input side to the first signal processing channel (13) and to the pulse detector (22) and sets the short-time power of the geophone output signal to the value "1" for the duration of the power pulses output by the pulse detector (22), by a pulse extractor (24), which is connected to the output of the pulse eliminator (23) and extracts a predetermined maximum number of the greatest power pulses from the cleaned-up time segments of the short-time power of the geophone output signal present at the output of the pulse eliminator (23), by a confidence calculator (25), which is connected to the output of the pulse extractor (24) and determines a confidence measure from the number of extracted power pulses and their average pulse power and ascertains the confidence measure maximum reached within a time segment, and by an indicating unit (26), which is connected downstream of the confidence calculator (25) and displays the confidence measure maximum.

12. Device according to Claim 11, **characterized in that** the pulse extractor (24) has a number of outputs corresponding to the predetermined maximum number of pulses, at which outputs the extracted power pulses are present, ordered according to their magnitude, **in that** the confidence calculator (25) has a plurality of summators (27), of which the first summator (27) is connected on the input side to the first two outputs of the pulse extractor (24) and the other summators (27) are respectively connected by one input to the preceding summator (27) and by the other input to one of the following outputs of the pulse extractor (24), **in that** connected to the output of each summator (27) is an averager (28), **in that** connected downstream of each averager (28) is a memory (29), in which, for a number of pulses in each respective case, the confidence measure is stored as a function of the mean value of the pulse powers, and **in that** the outputs of the memories (29) are connected to a maximum searcher (30), which outputs at its output the greatest of the confidence measure values present at the memory outputs.

13. Device according to Claim 11 or 12, **characterized in that** the indicating unit (26) has a display with at least one luminous bar (31), the length of which is set in accordance with the confidence measure maximum output at a given instant at the output of the maximum searcher (30).

14. Device according to Claim 13, **characterized in that** the luminous bar (31) remains visible for a time period predetermined as a maximum (up to approximately 60 s) with a luminosity and/or colour and/or colour graduation corresponding to the age ranking of the output of the confidence measure maximum.

15. Device according to Claim 14, **characterized in that** the end of the extent reached by the luminous bar (31) within a further, longer time period predetermined as a maximum (up to approximately 5 min) is visible as a luminous marking (32).

16. Device according to one of Claims 13 to 15, **characterized in that** a plurality of surveillance points (12) are provided along a route to be kept under surveillance, **in that** a luminous bar (31) for each surveillance point (12) is present in the display of the indicating unit (26) and **in that** the luminous bars (31) are arranged parallel to one another, one beneath the other, and in an arrangement corresponding to the sequence of the surveillance points (12).

## Revendications

1. Procédé de détection de piétons passant par un point de surveillance en utilisant un géophone installé sur le point de surveillance à la suite duquel est branché un dispositif de traitement du signal, **caractérisé en ce qu'**un microphone est en plus installé au point de surveillance, que des pointes ou impulsions de signal sont détectées continuellement dans les signaux de sortie du microphone pré-traités de manière appropriée en technique du signal, que dans les signaux de sortie du géophone pré-traités de la même manière les pointes ou impulsions de signal sont éliminées aux endroits où se produisent des impulsions de signal dans les mêmes intervalles de temps du signal de sortie du microphone, qu'un nombre maximum prédéfini d'impulsions de signal les plus grandes est extrait dans les intervalles de temps du signal de sortie du géophone nettoyés par cette élimination des impulsions et que la probabilité de détection d'un piéton est évaluée et affichée au moyen des impulsions de signal extraites.

2. Procédé selon la revendication 1, **caractérisé en ce qu'**un indice de confiance est déterminé et affiché pour évaluer la probabilité de détection d'un piéton à l'aide du nombre et des intensités des impulsions de signal extraites.

3. Procédé selon la revendication 2, **caractérisé en ce que** pour déterminer l'indice de confiance le nombre des impulsions de signal et les intensités de ces impulsions sont combinés entre eux de manière à ce que l'indice de confiance croît à la fois lorsque le nombre d'impulsions augmente et lorsque la valeur moyenne des intensités des impulsions augmente et, à l'inverse, décroît lorsque le nombre d'impulsions diminue et lorsque la valeur moyenne diminue et de préférence que la valeur finale supérieure de l'indice de confiance est indiquée par « 1 » et la valeur finale inférieure par « 0 ».

4. Procédé selon la revendication 2 ou 3, **caractérisé en ce que** l'indice de confiance est affiché par une barre lumineuse dont la longueur de l'extension allumée est définie en fonction de la valeur de l'indice de confiance.

5. Procédé selon la revendication 4, **caractérisé en ce que** les indices de confiance déterminés successivement dans le temps sont affichés avec la même barre lumineuse.

6. Procédé selon la revendication 5, **caractérisé en ce que** la luminosité et/ou la teinte lumineuse de la barre lumineuse est définie différemment suivant l'ancienneté de la détermination de l'indice de confiance.

7. Procédé selon la revendication 6, **caractérisé en ce que** l'allumage de l'ensemble de la barre lumineuse est maintenu pendant une période donnée (environ 60 secondes max.) et ensuite seule l'extrémité identifiée par un repère lumineux de la longueur d'extension maximale atteinte par la barre lumineuse et éclairée pendant une période comparativement beaucoup plus longue (environ 5 minutes max.).

8. Procédé selon l'une des revendications 1 à 7, **caractérisé en ce que** le niveau moyen des signaux de sortie du géophone et du microphone sont également affiché et de préférence représentés sous la forme de barres lumineuses dont les longueurs d'extension correspondent au niveau.

9. Procédé selon l'une des revendications 1 à 8, **caractérisé en ce que** le pré-traitement des signaux de sortie du géophone et du microphone consiste à calculer la puissance instantanée numérique des signaux de sortie et à normaliser celle-ci et que la détection, l'élimination et l'extraction des impulsions de signal sont effectuées dans les intervalles de temps de la puissance instantanée normalisée des signaux de sortie.

10. Procédé selon la revendication 9, **caractérisé en ce que** pour éliminer les impulsions de signal de la puissance instantanée normalisée du signal de sortie du géophone aux points correspondants, les pointes ou impulsions de puissance sont détectées pendant l'intervalle de temps associé de la puissance instantanée normalisée du signal de sortie du microphone puis mises à la valeur « 1 » pendant leur durée.

11. Dispositif de détection de piétons passant par un point de surveillance comprenant un géophone (10) installé au point de surveillance à la suite duquel est branché un canal de traitement du signal (13), **caractérisé par** un microphone (11) également installé au point de surveillance (12) à la suite duquel est branché un canal de traitement du signal (14), le premier canal de traitement du signal (13) branché à la suite du géophone (10) et le deuxième canal de traitement du signal (14) branché à la suite du microphone (11) étant configurés de telle manière qu'ils forment chacun des intervalles de temps de la puissance instantanée normalisée numérique des signaux de sortie du géophone ou du microphone, par un détecteur d'impulsions (22) branché à la suite du deuxième canal de traitement du signal (14), par un éliminateur d'impulsions (23) branché à l'entrée du premier canal de traitement du signal (13) et au détecteur d'impulsions (22), lequel éliminateur d'impulsions (23) est à « 1 » pendant la durée des impulsions de puissance de la puissance instantanée du signal de sortie du géophone, par un extracteur d'impulsions (24) relié à la sortie de l'éliminateur d'impulsions (23), lequel extrait un nombre maximum prédéfini d'impulsions de puissance les plus grandes des intervalles de temps nettoyés de la puissance instantanée du signal de sortie du géophone présents à la sortie de l'éliminateur d'impulsions (23), par un calculateur de confiance (25) raccordé à la sortie de l'extracteur d'impulsions (24), lequel calcule un indice de confiance à partir du nombre d'impulsions de puissance extraites et de leur puissance d'impulsion moyenne et détermine l'indice de confiance maximum atteint pendant un intervalle de temps, et par une unité d'affichage (26) branchée à la suite du calculateur de confiance (25), laquelle représente l'indice de confiance maximum.

12. Dispositif selon la revendication 11, **caractérisé en ce que** l'extracteur d'impulsions (24) présente un nombre de sorties correspondant au nombre maximum prédéfini d'impulsions sur lesquelles sont présentes les impulsions de puissance extraites classées en fonction de leur grandeur, que le calculateur de confiance (25) présente une pluralité de totalisateurs (27), parmi lesquels l'entrée du premier totalisateur (27) est raccordée aux deux premières sorties de l'extracteur d'impulsions (24) et une entrée de chacun des totalisateurs (27) suivants est à chaque fois reliée au totalisateur (27) précédent et l'autre entrée est raccordée à l'une des sorties suivantes de l'extracteur d'impulsions (24), qu'un calculateur de valeur moyenne (28) est raccordé à la sortie de chaque totalisateur (27), que chaque calculateur de valeur moyenne (28) est suivi d'une mémoire (28) qui contient pour chaque nombre d'impulsions un indice de confiance sous la forme d'une fonction de la valeur moyenne des puissances d'impulsion, et que les sorties de la mémoire (29) sont reliées avec un détecteur de maximum (30) qui délivre sur sa sortie les valeurs maximales de l'indice de confiance obtenues aux sorties de la mémoire.

13. Dispositif selon la revendication 11 ou 12, **caractérisé en ce que** l'unité d'affichage (26) présente un écran avec au moins une barre lumineuse (31) dont la longueur est définie en fonction de l'indice de confiance maximum momentané présent à la sortie du détecteur de maximum (30).

14. Dispositif selon la revendication 13, **caractérisé en ce que** la barre lumineuse (31) reste visible pendant une période maximale prédéfinie (environ 60 secondes max.) avec une luminosité et/ou une couleur et/ou une graduation de couleur correspondant au degré d'ancienneté de la sortie de l'indice de confiance maximum.

15. Dispositif selon la revendication 14, **caractérisé en ce que** l'extrémité de la longueur d'extension atteinte par la barre lumineuse (31) reste visible sous la forme d'un repère lumineux (32) pendant une période supplémentaire maximale (environ 5 minutes max.) au-delà de celle-ci.

16. Dispositif selon l'une des revendications 13 à 15, **caractérisé en ce que** plusieurs points de surveillance (12) sont prévus le long d'un parcours à surveiller, qu'il existe une barre lumineuse (31) sur l'écran de l'unité d'affichage (26) pour chaque point de surveillance (12) et que les barres lumineuses (31) sont disposées parallèlement les unes aux autres et dans une disposition correspondant à l'ordre des points de surveillance (12).
